# EUROPEAN PATENT APPLICATION

(11) **EP 1 550 639 A1**
(43) Date of publication of application: **06.07.2005**
(21) Application number: 04030337.2
(22) Date of filing: 21.12.2004
(51) Int. Cl.: C03B 23/03, C03B 23/035, C03B 23/025, C03B 23/027

(54) **Method for bending a glass sheet and apparatus therefor**

(30) Priority: 26.12.2003 JP 2003433533
(71) Applicant: Asahi Glass Company, Limited, Chiyoda-ku, Tokyo 100-8405 (JP)
(72) Inventor: Hori, Junji, Taketoyo-cho, Chita-gun, Aichi (JP); Fukami, Masao, Taketoyo-cho, Chita-gun, Aichi (JP); Yoda, Kazushige, Taketoyo-cho, Chita-gun, Aichi (JP); Kitajima, Yutaka, Sumida, Aikawa-machi, Aiko-gun, Kanagawa (JP)
(74) Representative: Müller-Boré & Partner Patentanwälte

(57) **Abstract**

There are a preliminarily bending step for putting heated and softened glass sheet on a preliminarily bending supporting-frame, the glass sheet having an edge portion supported by the preliminarily bending supporting-frame, and for bending the glass sheet into a desired preliminarily bent shape while putting the glass sheet on the preliminarily bending supporting-frame; and a finally bending step for transferring the preliminarily bent glass sheet on a finally bending supporting-frame, the glass sheet having an edge portion supported by the finally bending supporting-frame, and for bending the glass sheet into a final bent shape by pressing the glass sheet against a bending surface of a finally bending mold while putting the glass sheet on the finally bending supporting-frame.

## Description

The present invention relates to a method for bending a glass sheet and an apparatus therefor, in particular a method for bending a glass sheet and an apparatus therefor, which are suitable to bend a glass sheet in a desired combination of curved surfaces, the glass sheet having been heated to a temperature in the vicinity of the softening point.

Recent automobile window glass has been required to have various shapes and curvatures, which are influenced by a change in design. In particular, rear windshields have needed curved glass sheets, which have a combination of curved surfaces in a complicated shape or a deeply bent shape, such as a substantially J-character shape or a substantially S-character shape in vertical section, and which have a larger amount of deformation and have the deformation confined to a portion of a bent region.

A method for bending a glass sheet by pressing the glass sheet in a heating furnace, which is one of the methods for producing a curved glass sheet, is appropriate as the method for producing a glass sheet in a complicated shape or a deeply bent shape since the glass sheet can be bent in a high temperature state.

With respect to the method for bending a glass sheet by pressing the glass sheet in a heating furnace, there has been known a bending apparatus, which employs a press ring as a bottom mold to put a glass sheet thereon, preliminarily bends the glass sheet by gravity before pressing, followed by bending the glass sheet by pressing the glass sheet against a bending surface of a male mold (see, e.g., USP 4,859,225).

In accordance with this bending apparatus, 1) a glass sheet, which has been heated to a temperature in the vicinity of the softening point during conveyance by rollers, is put on the press ring by a transferring unit having a positioning system. 2) While the press ring moves to a pressing position provided downstream, having the glass sheet put thereon, the glass sheet is deformed by gravity. This deformation serves as preliminarily bending before pressing. 3) At the pressing position, the glass sheet is pressed between the male mold in an upper position and the press ring in a lower position to be bent in a desired bent shape. At this time, the male mold bends the glass sheet in conjunction with vacuum suction. 4) The glass, which has been pressed, is sucked and held by the male mold to be removed from the press ring. Then the glass sheet is put on a cooling ring entering from a downstream side outside the heating furnace, is carried outside the heating furnace, and is tempered by an air-cooling and tempering device. In accordance with this bending apparatus, it is possible to obtain a glass sheet in a complicated shape or a deeply bent shape by forming the bending surface in a desired shape since the glass sheet can be bent in a shape according to the bending surface of the male mold.

However, the apparatus for bending a glass sheet, which has been disclosed in the prior art, has caused the following problems. Specifically, it is impossible to realize an optimum bending method since it is impossible to arbitrarily control the amount of deformation in a glass sheet during process. In particular, it is impossible to bend a glass sheet in an optimum shape since when preliminarily bending by the press ring, the press ring has limitations in terms of shape and function because of having a shape corresponding to the male mold. As a result, when a glass sheet is required in such a bent shape that the glass sheet is bent in two directions (in the form of a combination of curved surfaces) or is bent only in a limited region, the glass sheet is subjected to distortion caused by deformation during pressing and has an optical defect. Additionally, a glass sheet is staying on the press ring for a long time since there is only one press ring. Thus, it has not been possible to increase productivity since the time for each glass sheet to occupy the press ring is so long that it is impossible to reduce the production time for each glass sheet.

It is an object of the present invention to solve the problems of the prior art and to provide a method for bending a glass sheet and an apparatus therefor, which are capable to bending a glass sheet in a complicated shape or a deeply bent shape with good quality.

The present invention provides a method for bending a glass sheet, which comprises a heating step for heating and softening a glass sheet, and a bending step for bending the heated and softened glass sheet in a desired shape; characterized in that the bending step comprises a preliminarily bending step for putting the heated and softened glass sheet on a preliminarily bending supporting-frame, the glass sheet having an edge portion supported by the preliminarily bending supporting-frame, and for bending the glass sheet into a desired preliminarily bent shape while putting the glass sheet on the preliminarily bending supporting-frame; and a finally bending step for transferring the preliminarily bent glass sheet on a finally bending supporting-frame, the glass sheet having an edge portion supported by the finally bending supporting-frame, and for bending the glass sheet into a final bent shape by pressing the glass sheet against a bending surface of a finally bending mold while putting the glass sheet on the finally bending supporting-frame.

An amount of deformation of the glass sheet in the preliminarily bending step may be from 20 to 80% of an amount of deformation of the glass sheet caused in a course of from the heating step to the finally bending step.

The preliminarily bending step and the finally bending step may be performed in a heating furnace.

The preliminarily bending step may comprise at least one step or a combination of at least two steps selected from the group consisting of a) a step for pressing the glass sheet between the preliminarily bending supporting-frame and a preliminarily bending mold, b) a step for sucking a lower surface of the glass sheet put on the preliminarily bending supporting-frame, c) a step for heating at least one portion of the glass sheet put on the preliminarily bending supporting-frame, and d) a step for employing a vertically movable ring element to support one portion of the glass sheet put on the preliminarily bending supporting-frame.

The present invention also provides an apparatus for bending a glass sheet, which comprises a heater for heating and softening a glass sheet, and a bending device for bending the heated and softened glass sheet in a desired shape; characterized in that the bending device comprises a preliminarily bending unit including a preliminarily bending supporting-frame and a preliminarily bending means, the glass sheet being put on the preliminarily bending supporting-frame and having an edge portion supported by the preliminarily bending supporting-frame, the preliminarily bending means bending the glass sheet in a desired preliminarily bent shape while the glass sheet is put on the preliminarily bending supporting-frame; and a finally bending unit including a finally bending supporting-frame and a finally bending mold, the preliminarily bent glass sheet being put on the finally bending supporting-frame and having an edge portion supported by the finally bending supporting-frame, the glass sheet being pressed by the finally bending mold, whereby the glass sheet is bent in a final bent shape.

An amount of deformation of the glass sheet caused by the preliminarily bending unit may be from 20 to 80% of an amount of deformation of the glass sheet finally caused.

The preliminarily bending unit may comprise at least one element or a combination of at least two elements selected from the group consisting of a) a preliminarily bending mold, for pressing the glass sheet, b) a unit including a suction chamber disposed under the preliminarily bending supporting-frame and an air sucker communicating with the suction chamber, c) a heater for heating at least one portion of the glass sheet put on the preliminarily bending supporting-frame, and d) a unit including a plurality of ring elements forming the preliminarily bending supporting-frame and a driving device for vertically moving at least one of the ring elements.

The finally bending mold and/or the preliminarily bending mold may have a plurality of apertures formed in a bending surface thereof, whereby the glass sheet is bent by sucking air through the apertures after the glass sheet is pressed.

The preliminarily bending unit and the finally bending unit may be disposed in a heating furnace.

The apparatus may further comprising a roller conveyor for conveying the heated and softened glass sheet, a floating unit disposed at a most downstream portion of the roller conveyor in order that the glass sheet conveyed by the roller conveyor is floated by injected air, a flat mold for holding the floated glass sheet without contact with the glass sheet, and a positioner for adjusting a position of the glass sheet with respect to the flat mold.

As explained, the present invention can realize a desired preliminarily bent shape with high precision by providing a unit dedicated to preliminarily bending. In particular, the present invention can realize an optimum preliminarily bent shape and prevent optical distortion from being caused to make a wrinkle during finally bending by providing a supporting-frame dedicated to preliminarily bending. The present invention can increase productivity in comparison with the prior art since a glass sheet can be finally bent by a finally bending unit while a different glass is be preliminarily bent by the preliminarily bending unit.

In the drawings,
Fig. 1 is a perspective view of the apparatus for bending a glass sheet, according to a first embodiment of the present invention, wherein some parts of the apparatus are seen through;
Fig. 2 is a schematic side view showing the structure of the apparatus shown in Fig. 1;
Fig. 3 is a plan view showing the structure of a driving device for positioners;
Fig. 4 is a side view showing the structure of the driving device shown in Fig. 3;
Fig. 5 is a cross-sectional view showing the essential structure of the apparatus shown in Fig. 1;
Fig. 6 is a cross-sectional view showing the structure of the preliminarily bending device shown in Fig. 5;
Fig 7 is a cross-sectional view showing the essential structure of the apparatus for bending a glass sheet, according to a second embodiment;
Fig. 8 is a cross-sectional view of the structure of the preliminarily bending device shown in Fig. 7;
Fig. 9 is a cross-sectional view showing the essential structure of the apparatus for bending a glass sheet, according to a third embodiment;
Fig. 10 is a cross-sectional view showing the essential structure of the apparatus for bending a glass sheet, according to a fourth embodiment;
Fig. 11 is a cross-sectional view showing the essential structure of the apparatus for bending a glass sheet, according to a fifth embodiment;
Fig. 12 is a cross-sectional view showing the essential structure of the apparatus for bending a glass sheet, according to a sixth embodiment;
Figs. 13(A) to 13(D) are schematic views showing arrangements of a preliminarily bending unit and a finally bending unit;
Figs. 14(A) to 14(C) are schematic views showing another embodiment of a unit for transferring a heat and softened glass sheet to a preliminarily bending supporting-frame;
Fig. 15 is a plan view showing another embodiment of the positioners; and
Figs. 16(A), 16(B) and 16(C) are a side view showing a preliminarily bending supporting-frame, a side view showing a finally bending supporting-frame and a plan view showing an example of the relationship between the preliminarily bending supporting-frame (or the finally bending supporting-frame) and a glass sheet.

Now, preferred embodiments of the method for bending a glass sheet and an apparatus therefore, according to the present invention will be described in detail, referring to the accompanying drawings.

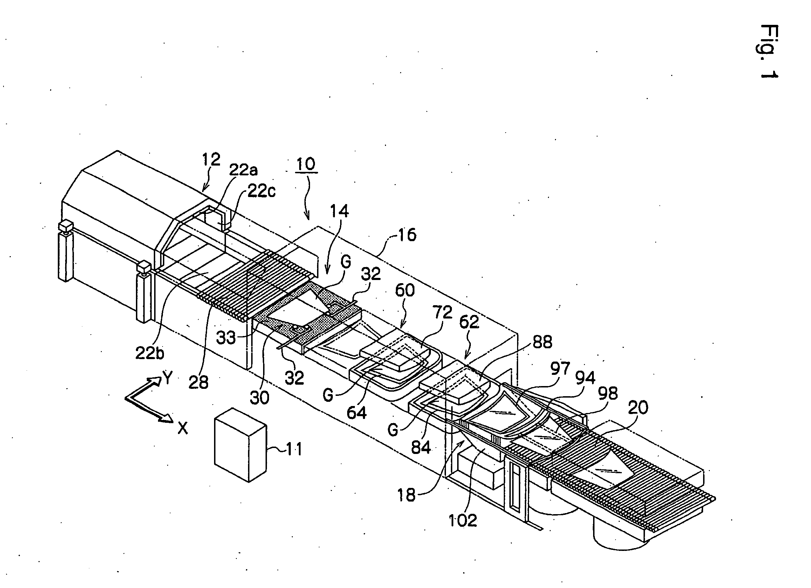

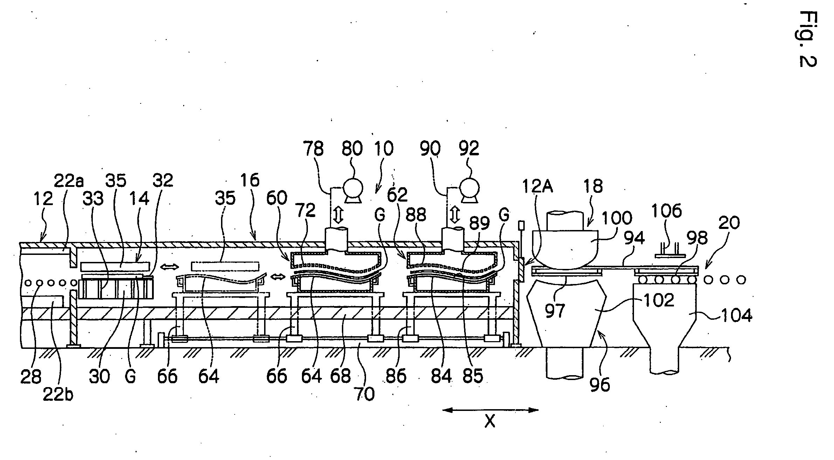

The apparatus for bending a glass sheet 10, according to a first embodiment, which is shown in Figs. 1 and 2, is configured to include a heating furnace 12, a positioning zone 14, a bending furnace 16, an air-cooling and tempering zone 18 and a discharge roller conveyor 20 in this order from an upstream side toward a downstream side in a direction to convey a glass sheet G. The operation timing, the heater temperature and the like in each of the respective sections are collectively controlled by a controller 11.

The heating furnace 12 is an electrically heating furnace, which is divided into a plurality of zones (the positioning zone 14 and the bending furnace 16 also are similar electrically heating furnaces). Each of the electrically heating furnaces has a ceiling heater 22a, a floor heater 22b and lateral heaters 22c. With respect to some of the zones, no heaters are shown for simplification. Each of the heaters is set at a temperature to be given to the glass sheet G according to the composition, the shape, the size, the thickness or the like of the glass sheet G to be bent in each of the electrically heating furnaces.

The glass sheet G is conveyed by a roller conveyor 28 or the like in the respective electrically heating furnaces. The glass sheet is conveyed into the positioning zone 14 after having been heated to a bending temperature (a temperature in the vicinity of the softening point, e.g., a temperature of from 650 to 720°C) during conveyance in a former half section of the electrically heating furnaces.

The positioning zone 14 includes a hearth bed 30, traveling positioners 32 and 32, and a flat mold 35. The hearth bed 30 is a molding board, which has a sufficiently great surface area with respect to the surface area of one surface of the glass sheet G, and which has a flat surface densely formed with a large number of air injection apertures 33. The hearth bed 30 has a lower portion formed with an air intake port (not shown) in communication with the air injection apertures 33. The air intake port is connected to a combustion blower (not shown) through a damper (not shown).

Hot and compressed air supplied from the combustion blower is injected upward from the air injection apertures 33 through the air intake port after having been pressure-regulated by the damper. The air pressure at that time is set to such a degree that the glass sheet G can be supported in an air-floating state. Thus, the glass sheet G that has been conveyed into the positioning zone 14 is floating from the upper surface of the hearth bed 30 and is supported in such an air-floating state.

A latter half portion of the roller conveyor 28 and the hearth bed 30 form a conveying path, which has a slight declination (e.g., a declination of from about 1 to several degrees) toward a downstream direction (in the right direction in Fig. 1 and Fig. 2). Thus, the glass sheet G is moving downstream at a speed, being supported in an air-floating state above the hearth bed 30 by a combination of an inertial force given from the roller conveyor 28 and the gravity loaded to the glass sheet G.

The positioners 32 are totally disposed at two locations so as to receive downstream corner portions of the glass sheet G supported in such an air-floating state as shown in Fig. 2. The positioners 32 are disposed so as to be independently movable in the direction to convey the glass sheet G (hereinbelow, referred to as the X direction) and in a direction orthogonal to the X direction on a horizontal plane (hereinbelow, referred to as the Y direction) .

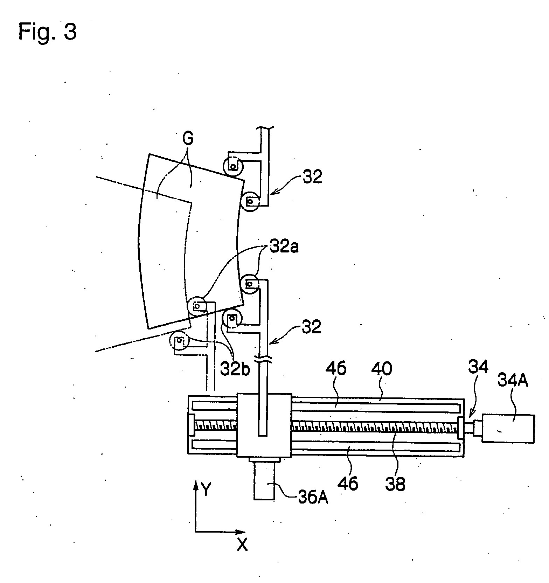

The paired positioners 32 have leading edges forked as shown in Fig 3. The respective forked leading edges have disks 32a and 32b for contact with edges of the glass sheet G mounted to lower sides thereof so as to be rotatable. When the glass sheet G enters the positioning zone 14, the glass sheet G has front edges brought into contact with the disks 32a and 32a.

At the same time as the positioners 32 and 32 move in the X direction while receiving the glass sheet G by the disks 32a and 32a, the positioners 32 and 32 move slightly inward in the Y direction, bring the disks 32b and 32b on the respectively leading edges into contact with corner portions of the glass sheet G and move the glass sheet G by a slight amount in Y direction for positioning in the Y direction. Thus, the glass sheet G is positioned in the Y direction. In this way, the glass sheet G is positioned in the X direction and the Y direction in the positioning zone. This positioning is performed for the purpose of the glass sheet G being accurately positioned with respect to a preliminarily bending supporting-frame (stated later) disposed in the bending furnace 16 shown in Fig. 1 and Fig. 2. The glass sheet G, which has been positioned by the positioners 32 and 32, is conveyed to a position vertically above the preliminarily bending supporting-frame 64 after having been sucked and held by the flat mold 35.

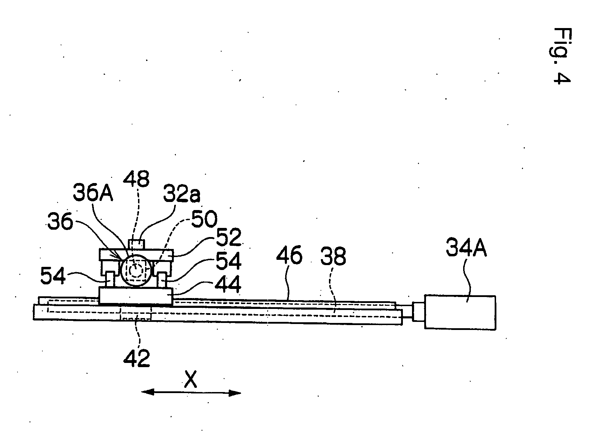

A device for moving one of the positioners 32 and 32, which is shown in Fig. 3 and Fig. 4, comprises a ball screw device 34 disposed in the X direction, a ball screw device 36 disposed in the Y direction and the like. The ball screw device 34 has a feed screw 38 extending along a base 40 disposed in the X direction, and the ball screw device 34 has a nut 42 disposed at a lower portion of an X block 44. The X block 44 is engaged with the feed screw 38 through the nut 42 and is supported so as to be movable in the X direction on a pair of rails 46 and 46 disposed along the base 40. Thus, when an electric motor 34A of the ball screw device 34 is driven in a forward or reverse direction, the X block 44 is moved in the X direction.

A feed screw 48, which is indicated by a dotted line in Fig. 4, is disposed in Y direction above an upper surface of the X block 44. The ball screw device 36 has a nut 50 disposed at a lower portion of a Y block 52. The Y block 52 is engaged with the feed screw 48 through the nut 50 and is supported so as to be movable in the Y direction on a pair of rails 54 and 54, which are disposed along the Y direction on the upper surface of the X block 44.

Thus, when an electric motor 36A of the ball screw device 36 is driven in a forward or reverse direction, the Y block 52 is moved in the Y direction. When the ball screw devices 34 and 36 are driven, the positioner 32 fixed to the Y block 52 is moved in the X direction and the Y direction. The positioning zone 14 also has electric heaters (not shown) disposed on a furnace wall above the hearth bed 30, lateral walls, a furnace floor and the like in order to maintain the glass sheet G at a high temperature during positioning.

On the other hand, the flat mold 35 shown in Fig. 2 is a molding board, which has a sufficiently wide surface with respect to the surface area of one side of the glass sheet G, and the flat mold has a large number of air injection/suction apertures (not shown) densely formed in a lower flat surface. The flat mold 35 has an upper portion formed with an air intake port (not shown) in communication with the air injection/suction apertures. The air intake port is coupled with a combustion blower (not shown) and an air sucking device through a damper (not shown).

The flat mold 35 is configured so as to be capable of reciprocating between a position indicated by a solid line in Fig. 2 and a position intermediate the position indicated by the solid line and a preliminarily bending device (corresponding to the preliminarily bending unit in Claims) 60 by an unshown conveying unit.

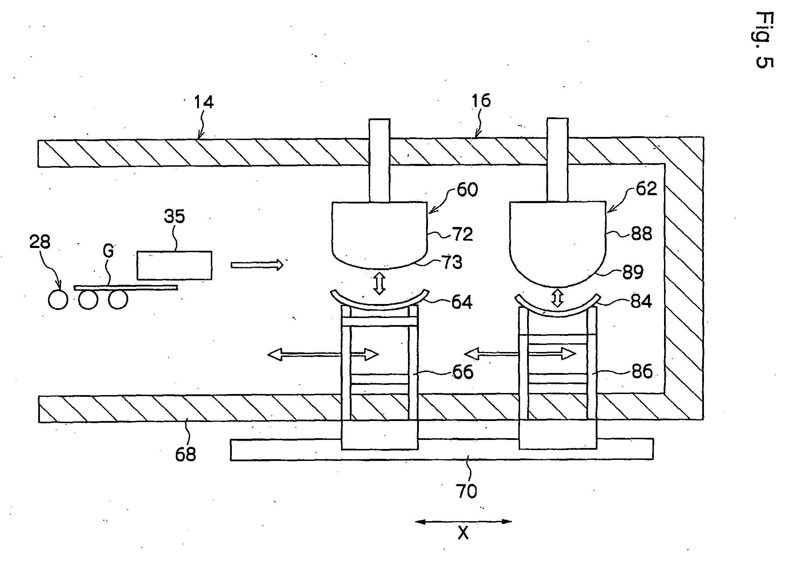

The bending furnace 16 communicates with the positioning zone 14, and the inside of the bending furnace is maintained in such a high temperature state that the glass sheet can be bent by unshown heaters as in the positioning zone 14. The bending furnace 16 has the preliminarily bending device 60 disposed on an upstream side and a finally bending device (corresponding to the finally bending unit in Claims) 62 disposed on a downstream side therein as shown in Fig. 5.

Now, the procedure for transferring the glass sheet G from the positioning zone 14 to the preliminarily bending device 60 will be explained. First, the flat mold 35 lowers to suck and hold the glass sheet G in such a state that the glass sheet G has been positioned in the positioning zone 14. At that time, by increasing the pressure of the air injected from the air injection apertures 33 of the hearth bed 30 in comparison with the case wherein the glass sheet G has been air-floating, the sucking and holding action of the glass sheet G by the flat mold 35 is assisted. While the glass sheet G is sucked and held by the flat mold 35, the glass sheet is conveyed into the position above the preliminarily bending supporting-frame 64 forming a part of the preliminarily bending device 60 in the bending furnace 16. The glass sheet G, which has been conveyed into the position above the preliminarily bending supporting-frame 64, is dropped by release of the sucking and holding action by the flat mold 35, and the glass sheet is put on the preliminarily bending supporting-frame 64. Since the preliminarily bending supporting-frame 64 has moved toward the flat mold 35 just before the glass sheet G has been put on the supporting-frame, putting the glass sheet G is performed at a position indicated by two-dot chain lines in Fig. 2.

The preliminarily bending supporting-frame 64 of the preliminarily bending device 60 is formed in a shape along the outline of the glass sheet G so as to support a peripheral edge (end surfaces or portions in the vicinity of the end surfaces) of the glass sheet G. The preliminarily bending supporting-frame 64 may support the entire periphery of the glass sheet or a portion of the entire periphery. The preliminarily bending supporting-frame 64 may be disposed on an upper portion of a shuttle 66, which is made of steel. The shuttle 66 may have legs extending downward from a furnace floor 68 through slits (not shown) formed in the furnace floor 68 and supported so as to be movable in the X direction on rails 70. Thus, when the preliminarily bending supporting-frame 64 has moved at the position indicated by the two-dot chain lines in Fig. 2, the glass sheet G, which has been conveyed from the positioning zone 14, is put on the preliminarily bending supporting-frame. After that, the preliminarily bending supporting-frame 64 is moved in the right direction in this figure by an unshown conveying unit (e.g., a timing belt driving device) and is stopped at a position indicated by a solid line in Fig. 2, e.g., at a position just under a preliminarily bending mold 72.

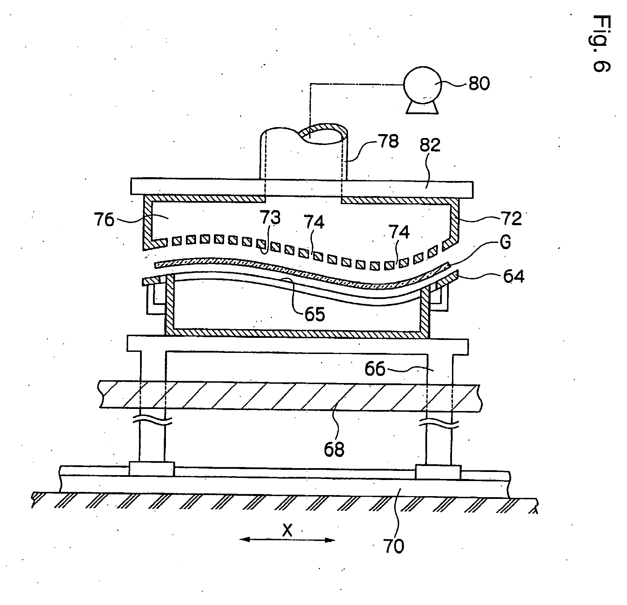

On the other hand, the preliminarily bending mold 72 is supported so as to be liftable by a ceiling portion of the bending furnace 16 through an unshown lifting unit (e.g., a hydraulic cylinder). The preliminarily bending mold 72 has a bending surface 73 formed so as to correspond to substantially the entire surface of the glass sheet G in terms of planar size. As shown in Fig. 6, the bending surface 73 is curved in an S-character shape in vertical section and has air apertures 74 formed in substantially the entire surface thereof. The respective air apertures 74 communicate with an air passage 76 as a hollow portion of the preliminarily bending mold 72. The air passage 76 is coupled with an air pump 80 through a duct 78.

Thus, by driving the air pump 80 for injection or suction, it is possible to inject air through the respective air apertures 74 shown in Fig. 6 or suck air through the respective air apertures 74. By sucking air through the respective air apertures 74, the glass sheet G is sucked and held by the bending surface 73 of the preliminarily bending mold 72. In order to prevent the glass sheet G from being cooled when injecting air through the air apertures 74, it is necessary to provide, e.g., heaters in order to obtain hot air (the remaining heat of the heating furnace 12 may be utilized). The preliminarily bending supporting-frame 64 has a bending surface (a surface for supporting edges of the glass sheet G) 65 formed in substantially the reversed shape of the bending surface 73 of the preliminarily bending mold 72. Additionally, the preliminarily bending mold 72 is fixed to a lower portion of a carriage 82, and the carriage 82 is coupled with the lifting unit so as to be liftable.

The respective bending surfaces 65 and 73 of the preliminarily bending supporting-frame 64 and the preliminarily bending mold 72 are formed in a shallower shape than those of the finally bending device 62. Specifically, the amount of deformation of the glass sheet G during preliminarily bending is preferably from 20 to 80%, more preferably from 20 to 50% of the amount of deformation of the glass sheet that will be deformed from a flat shape into a final shape. It is preferred that the amount of deformation be defined, using the cross-curvature of the glass sheet G as a parameter. The cross-curvature is defined as the greatest one of form tolerances that are obtained by comparing the form of an actually manufactured glass sheet with a desired designed form. The curvature of a portion in a surface of the glass sheet that has the greatest degree of deformation (e.g., a portion in a surface of the glass sheet that has the greatest one of tension forces caused during bending) may be defined as a criterion. Or the mean value of the curvatures at plural points may be defined as a criterion. It is preferred that preliminarily bending be performed in a range of from 20 to 80% of the final curvature in either of the cases. By performing the preliminarily bending in this manner, it is possible to avoid problems, such as the formation of a wrinkle in the glass sheet G and the occurrence of optical distortion in the glass sheet, since it is possible to prevent an unacceptable force from being applied to the glass sheet during finally bending.

The glass sheet G, which has been preliminarily bent in a desired bent shape by the preliminarily bending device 60, is sucked and held by the preliminarily bending mold 72, and then the glass sheet is put on a finally bending supporting-frame 84 of the finally bending device 62 (see Fig. 5), which has moved to a position just under the preliminarily bending mold 72. At that time, the preliminarily bending supporting-frame 64 has moved to the position indicated by the two-dot chain lines in Fig. 2

It is preferred that the finally bending supporting-frame 84 have such a shape and size that the glass sheet G has an entire peripheral edge portion brought into contact with the supporting-frame. The finally bending supporting-frame 84 is disposed on an upper portion of a shuttle 86. The shuttle 86 has legs extending through the furnace floor 68 and mounted to the rails 70 so as to be movable in the X direction. Thus, when the sucking and holding action by the preliminarily bending mold 72 is released after the finally bending supporting-frame 84 has moved to a receiving position as the position just under the preliminarily bending mold 72, the glass sheet G thus preliminarily bent is dropped and is put on the finally bending supporting-frame 84. The finally bending supporting-frame 84 moves in the right direction in this figure, having the glass sheet put thereon, and the supporting-frame is positioned to a position indicated by a solid line in Fig. 5, i.e., just under a finally bending mold 88. The movement of each of the finally bending supporting-frame 84 and the shuttle 86 may be made by, e.g., a timing belt driving device.

The finally bending mold 88 is supported so as to be liftable by a ceiling portion of the bending furnace 16 through an unshown lifting unit (e.g., a hydraulic cylinder). The finally bending mold 88 has a bending surface formed so as to correspond to a substantially entire surface of the glass sheet G in terms of planar size and formed so as to have a shape having a greater curvature than the preliminarily bending mold 72. The bending surface 89 of the finally bending mold 88, which is curved in a convex shape toward downward, also has air apertures formed in a substantial entire surface thereof as in the preliminarily bending mold 72. The respective air apertures communicate with an air passage as a hollow portion of the finally bending mold 88, and the air passage is coupled with an air pump 92 through a duct 90 shown in Fig. 2.

Thus, by driving the air pump 92 for injection or suction, it is possible to inject air through the respective air apertures or suck air through the respective air apertures. By sucking air through the respective air apertures, the glass sheet G is sucked and held by the bending surface 89 of the finally bending mold 88. When air is injected through the air apertures, it is necessary to provide, e.g., a heater in order to obtain hot air as in the preliminarily bending mold. The finally bending supporting-frame 84 has a bending surface (a surface for supporting a peripheral edge of the glass sheet G) 85 formed in substantially the reversed shape of the bending surface 89 of the finally bending mold 88.

When the glass sheet G is bent outside the furnace, it is preferred that the bending surface 89 of the finally bending mold 88 have substantially the same shape as the final bent shape of the glass sheet as a product. However, in the case of the in-furnace bending device 10 wherein a glass sheet is bent in the bending furnace 16, it is preferred that the bending surface have a slightly different shape from the final bent shape of the glass sheet G as a product in consideration of the glass sheet G being deformed by gravity in the course of being conveyed to the tempering zone 18 after being bent.

The air-cooling and tempering zone 18 shown in Fig. 2 includes a quench shuttle 94, an air-cooling and tempering device 96 and the like. The quench shuttle 94 has a quench ring 97 fixed on a left side and a catch member 98 fixed on a right side.

The quench ring 97 has the purpose of receiving the glass sheet G that has been bent in the bending furnace 16. The quench ring is formed in such a shape to correspond to the peripheral edge shape of the glass sheet G, which has substantially conformed to the bent shape of a curved glass sheet to be bent. The quench ring 97 reciprocates between a position just under the finally bending mold 88 (receiving position) in the bending furnace 16 and a air-cooling and tempering position (transferring position) for air-cooling and tempering by the air-cooling and tempering device 96.

The air-cooling and tempering device 96 includes an upper blowing head 100 and a lower blowing head 102, through which cooling air supplied from a blower (not shown) is injected against both upper and lower surfaces of the glass sheet G. The glass sheet G is positioned at the air-cooling and tempering position between the upper blowing head 100 and the lower blowing head 102, being supported by the quench ring 97, and then the glass sheet is air-cooled and tempered by cooling air injected from the upper blowing head 100 and the lower blowing head 102. The pressure of the cooling air from the lower blowing head 102 is set at a pressure that can support the glass sheet G in an air-floating state. Thus, the glass sheet G that has been positioned at the air-cooling and tempering position is air-cooled and tempered while being supported in such an air-floating state. In the meantime, the quench shuttle 94 moves in a left direction in Fig. 2 and is positioned at the receiving position stated above.

On the other hand, the catch member 98 has the purpose of receiving the glass sheet G, which has been air-cooled and tempered at the air-cooling and tempering position while being supported in such an air-floating state. The catch member has plural frames for putting the glass sheet G thereon. The catch member 98 reciprocates between the air-cooling and tempering position (the receiving position) and an inlet position for the discharge roller conveyor 20 (a transferring position) by reciprocating the quench shuttle 94 in the X direction.

The quench shuttle 94 may be reciprocated in the X direction by a horizontally moving device (not shown), such as a chain driving device or a timing belt driving device.

At the transferring position, there is disposed an air-floating device 104. The glass sheet G, which has been air-cooled and tempered and conveyed to the transferring position, is floated and pressed against a stopper 106 by air injected from an upper surface of the air-floating device 104.

In the meantime, the quench shuttle 94 moves in the left direction in Fig. 2 and is positioned at the receiving position. At the air-floating device 104, the air pressure is controlled so as to be gradually reduced, and the glass sheet G, which is supported in such an air-floating state, is quietly put on the discharge roller conveyor 20.

Now, the operation of the apparatus for bending a glass sheet 10, according to the first embodiment will be explained.

First, the glass sheet G in a flat shape, which has been cut in dimensions and a shape corresponding to an automobile rear windshield, is heated to a temperature for bending operation by the respective heaters, being conveyed to the former half section (an upstream side (a left side) in Fig. 2) by the roller conveyor 28. The glass sheet G thus heated is conveyed from the former half section of the heating furnace 12 into the positioning zone 14 by the roller conveyor 28.

Next, the glass sheet G, which has been conveyed into the positioning zone 14, is supported in an air-floating state by the hearth bed 30, and the positioners 32 and 32 are brought into contact with edges of the glass sheet G in such an air-floating state to position the glass sheet G at a position corresponding to the preliminarily bending supporting-frame 64.

Next, the glass sheet G is sucked and held by the flat mold 35, and the flat mold 35 is moved toward the bending furnace 16 to convey the positioned glass sheet G into the bending furnace 16.

At that time, the preliminarily bending supporting-frame 64 waits for the glass sheet at a receiving position in the bending surface 16. When the glass sheet G is positioned at a position above the supporting-frame, the movement of the flat mold 35 is stopped, and the sucking and holding action is released to put the glass sheet G onto the preliminarily bending supporting-frame 64. After that, when the preliminarily bending supporting-frame 64 has moved to the position just under the preliminarily bending mold 72, the preliminarily bending mold 72 lowers to press the glass sheet G between the preliminarily bending supporting-frame 64 and the preliminarily bending mold 72, preliminarily bending the glass sheet in a curved shape. By this preliminarily bending operation, the glass sheet G is bent to a degree of from 20 to 80% of the final bent shape.

Next, the glass sheet G thus preliminarily bent is vacuum-sucked and held by the preliminarily bending mold 72 to be taken up from the preliminarily bending supporting-frame 64. While the glass sheet G is being sucked by the preliminarily bending mold 72, the preliminarily bending supporting-frame 64 moves to the receiving position to receive a second glass sheet G, and the finally bending supporting-frame 84 moves to the position just under the preliminarily bending mold 72, being interlocked with the preliminarily bending supporting-frame.

Next, the vacuum-sucking and holding action by the preliminarily bending mold 72 is released to put the preliminarily bent glass sheet G onto the finally bending supporting-frame 84. Then, the finally bending supporting-frame 84 is moved to the position just under the finally bending mold 88. At that time, the preliminarily bending supporting-frame 64, which has received the second glass sheet G, moves to the position just under the preliminarily bending mold 72.

Next, the preliminarily bent glass sheet G is bent in the final shape by being pressed between the finally bending supporting-frame 84 and the finally bending mold 88. On the other hand, the second glass sheet G is preliminarily bent in the preliminarily bending device 60 at that time.

Next, the glass sheet G is vacuum-sucked and held by the finally bending mold 88 to be taken up from the finally bending supporting-frame 84. Then, the finally bending supporting-frame 84 moves to the position just under the preliminarily bending mold 72. Being interlocked with the supporting-frame, a door 12A is opened, and the quench ring 97 enters the bending furnace 16 and stops at the position just under the finally bending mold 88. After that, the vacuum-sucking and holding action by the finally bending mold 88 is released to put the finally bent glass sheet G onto the quench ring 97. At substantially the same time, the vacuum-sucking and holding action by the preliminarily bending mold 72 is released to put the second preliminarily bent glass sheet G onto the finally bending supporting-frame 84.

The finally bent glass sheet G is discharged outside the furnace by the quench ring 97, and is cooled and tempered by the air-cooling and tempering device 96. After that, the glass sheet is received and is transferred to the inlet of the discharge roller conveyor 20 by the catch member 98. The glass sheet G is conveyed to an inspection section or a package section on a downstream side by the discharge roller conveyor 20. In the meantime, the second glass sheet G is finally bent, and is air-cooled and tempered, and a third or subsequent glass sheet G are dealt with, being subjected to the bending operation stated earlier, in sequence.

The apparatus for bending a glass sheet 10, according to the first embodiment can realize a desired preliminarily bent shape with high precision by including the device dedicated to preliminarily bending 60. In particular, it is possible to increase the reproducibility of the preliminarily bent shape by including the supporting-frame dedicated to preliminarily bending 64. Additionally, it is possible to drastically improve productivity in comparison with the prior art since the finally bending operation can be performed in the finally bending device 62 while the preliminarily bending operation is being performed in the preliminarily bending device 60.

Next, other embodiments of the present invention will be described.

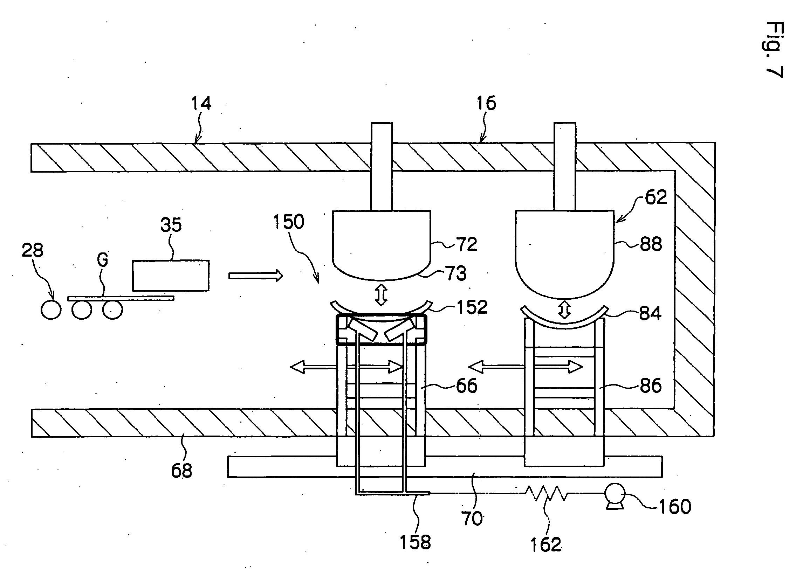

Fig. 7 to Fig. 12 show the internal structures of the bending furnaces 16 in bending apparatuses according to second to sixth embodiments. With respect to each of these bending furnaces 16, explanation of the finally bending device 62 disposed on the downstream side will be omitted since the finally bending device has the same structure as the finally bending device 62 explained with respect to the first embodiment. Explanation will be made on the structures and the operations of preliminarily bending devices 150, 200, 250, 300 and 350, which have different structures from the preliminarily bending device according to the first embodiment.

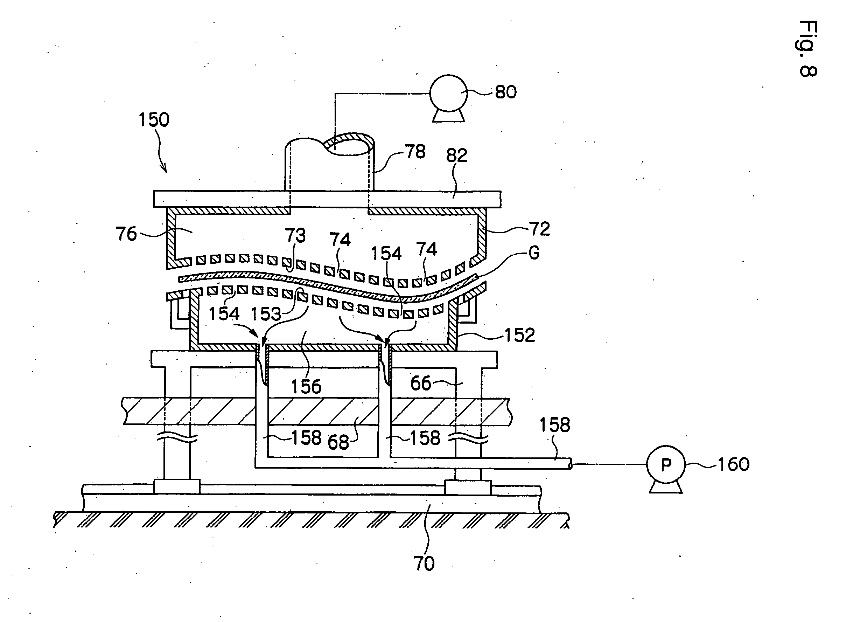

The preliminarily bending device 150 shown in Fig. 7 has a female mold 152, instead of the preliminarily bending supporting-frame 64, disposed therein. As shown in Fig. 8, the female mold 152 has a bending surface 153 formed on an upper surface thereof so as to be similar to a bending surface 73 of a preliminarily bending mold 72. The bending surface 153 has a sufficient surface area with respect to the surface area of the glass sheet G, and the bending surface 153 has air apertures 154 densely formed therein. These apertures 154 are coupled with an air pump 160 through an air passage 156 as a hollow portion of the female mold 152 and through air pipes 158. When the air pump 160 is driven, the air in the air passage 156 is sucked. Thus, the glass sheet G to be preliminarily bent is sucked and held by the bending surface 153 of the female mold 152. The air pipes 158 are coupled with the air pump 160 through a flexible pipe 162 as shown in Fig. 7 so that the movement of the shuttle 66 in X direction is accepted by extending and contracting actions of the flexible pipe 162.

This preliminarily bending device 150 employs the deformation of the glass sheet G by gravity and the vacuum action of the female mold 152 to preliminarily bend the glass sheet G. Specifically, (a) the glass sheet G, which has been heated to a temperature in the vicinity of or higher than the softening point in the heating furnace, is put on the female mode 152 by the flat mold 35.
(b) The glass sheet G put on the female mode 152 is deformed by gravity and is locally vacuum-sucked by the female mode 152 to perform preliminarily bending. During preliminarily bending, the glass sheet is bent to a degree of from 20 to 50% of the final bent shape.
(c) While preliminarily bending is performed, the female mode 152 moves to a position just under the preliminarily bending mold 72. Although the preliminarily bending mold 72 has a function to press the glass sheet G, the mold may be referred to as a suction mold since the preliminarily bending mold has a function to take up from the female mold 152 the glass sheet G, which has been preliminarily bent by the female mold 152. From this viewpoint, the preliminarily bending mold (suction mold) 72 shown in Fig. 8 is made simpler and lighter than the preliminarily bending mold 72 shown in Fig. 6 since the preliminarily bending mold according to this embodiment is specialized in vacuum suction. By this arrangement, (d) the glass sheet G that has been preliminarily bent by the female mold 152 is vacuum-sucked by the preliminarily bending mold (suction mold) 72 to be taken up from the female mold 152.
(e) While the glass sheet G is sucked by the preliminarily bending mold (suction mold) 72, the finally bending supporting-frame 84 moves to a position just under the preliminarily bending mold (suction mold) 72. Explanation of the subsequent steps will be omitted since the subsequent steps are made performed in a similar way to the bending apparatus 10 according to the first embodiment.

In accordance with the preliminarily bending device 150 which employs the female mold 152 to perform preliminarily bending by forced deformation due to gravity and suction, when the female mold has such a shape to deeply sag in a half oval shape in section, the preliminarily bending device can employ a vacuum action by the female mold 152, instead of a pressing action, to realize preliminarily bending with good optical quality without locally increasing the amount of distortion. By applying, in the bending process, the vacuum-sucking action to a portion of a glass sheet to be difficult to be bent, it is possible to reliably bend the glass sheet in a desired shape. Thus, it is possible to increase the shape stability in production and expand a bending range.

The preliminarily bending device may be configured so that as a modification of the female mold vacuuming system, a suction chamber is disposed under the preliminarily bending supporting-frame 64, the suction chamber is coupled with a suction pump (corresponding to an air suction unit in Claims), the air in the suction chamber is sucked by the suction pump, and preliminarily bending is performed by applying a bending force to a glass sheet G put, in close contact, on edges of the preliminarily bending supporting-frame 64.

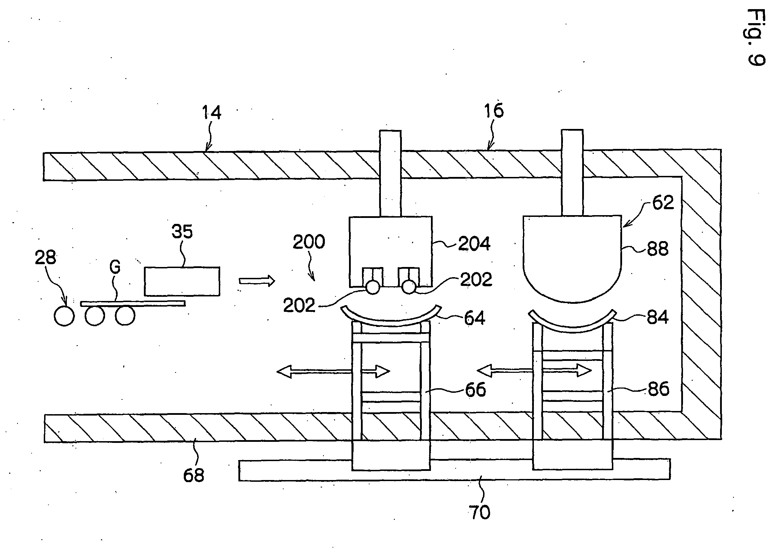

In the preliminarily bending device 200 shown in Fig. 9, local heaters (corresponding to a heater in Claim 6) 202 are disposed in place of the preliminarily bending mold 72. The local heaters 202 are mounted to positions on a lower surface of a header 204 disposed just above the preliminarily bending supporting-frame 64. The temperature of each of the heaters is set at an adequate value in accordance with the thickness of a glass sheet G. The glass sheet G put on the preliminarily bending supporting-frame 64 has a portion to be deeply bent, particularly intensively heated by the local heaters 202, thereby promoting softening of the portion to be deeply bent and promoting preliminarily bending of the glass sheet G on the preliminarily bending supporting-frame 64. A gas burner using, e.g., an acetylene gas, may be employed in place of the heaters 202.

In accordance with this preliminarily bending device 200, while preliminarily bending is mainly performed by deformation by gravity, a desired temperature distribution can be provided to the glass sheet G by the local heaters 202. Thus, the viscosity distribution of the glass sheet G can be controlled to adjust the amount of deformation of respective portions of the glass sheet by gravity without causing optical distortion.

Specifically, (a) the glass sheet G, which has been heated to a temperature of not lower than the softening point by the heating furnace, is put on the preliminarily bending supporting-frame 64 by the flat mold 35. (b) The preliminarily bending supporting-frame 64 moves to a position just under the local heaters 202. (c) The local heaters 202 lower to heat the glass sheet G on the preliminarily bending supporting-frame 64, raising the temperature of the portion to be deeply bent, which will have a great amount of deformation. Although the glass sheet G is deformed by gravity, the portion to be deeply bent that has a high temperature is subjected to the greatest amount of deformation. Thus, it is possible to promote preliminarily bending.

The local heaters 202 are parts, which are mounted in exchange for the preliminarily bending mold 72. By changing the height of the heaters 202 with respect to the glass sheet G, it is possible to heat an arbitrary portion in a limited way. A heat-shield plate may be used to prevent portions other than a desired portion from being heated.

When preliminarily bending has been completed, (d) the local heaters 202 are raised to be retracted. (e) The preliminarily bending supporting-frame 64 moves to the position just under the finally bending mold 88. (f) The finally bending mold 88 lowers to vacuum-suck and hold the glass sheet G and to take up the glass sheet from the preliminarily bending supporting-frame 64. (g) The finally bending supporting-frame 84 moves to the position just under the finally bending mold 88. (h) The finally bending mold 88 lowers to press the glass sheet G between the finally bending supporting-frame and the finally bending mold, performing finally bending. Explanation of the subsequent steps will be omitted since the subsequent steps are performed in a similar way to the bending apparatus 10 according to the first embodiment.

In accordance with the preliminarily bending device 200 which employs the preliminarily bending supporting-frame and the local heaters 202 to perform preliminarily bending, when the amount of deformation required for a glass sheet G varies from portion to portion, in particular when a glass sheet G has a local region to be subjected to a great amount of deformation, the glass sheet can be deeply bent in a desired shape by gravity by employing the local heaters 202 to locally heat the glass sheet so as to lower the viscosity of the local portion. Additionally, it is possible to prevent the optical quality from lowering and to expand a bending range since it is possible to reduce stresses occurred during bending by controlling the temperatures of the heaters 202, that is to say, it is possible to suppress the deformation of the glass sheet G by gravity to such amount of deformation that no optical distortion is caused.

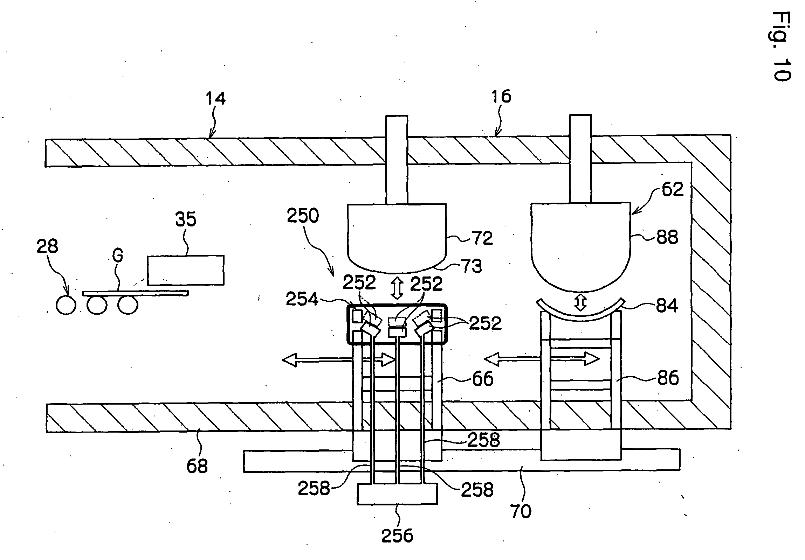

In the preliminarily bending device 250 shown in Fig. 10, a preliminarily bending supporting-frame 254 wherein plural ring elements 252 independently move upward and downward is disposed in place of the preliminarily bending supporting-frame 64. The ring elements 252 are mounted to pistons 258 of a lifting device 256 mounted to the shuttle 66. The ring elements are independently moved upward and downward by independent extending and contracting movements of the respective pistons 258 to bend the glass sheet G by gravity.

In accordance with this preliminarily bending device 250, although preliminarily bending is mainly formed by deformation by gravity, it is possible to control the progress of the deformation of a glass sheet G by gravity in terms of time and the amount of deformation of a portion to be deeply bent by gravity by changing the heights of the respective ring elements 252, as a unit for controlling the amounts of deformation in respect portions of the glass sheet G, based on desired amounts of deformation for the respective portions of the glass sheet.

Specifically, (a) the glass sheet G, which has been heated to a temperature of not lower than the softening point in the heating furnace, is put on the preliminarily bending supporting-frame 254 by the flat mold 35. (b) The ring elements (glass sheet receiving elements) 252, which have different shapes, is disposed inside a normal ring in the preliminarily bending supporting-frame 254, and the ring elements are independently moved upward and downward according to the deformation of the glass sheet G by gravity, performing preliminarily bending by gravity. (c) While preliminarily bending is performed, the preliminarily bending supporting-frame 254 moves to the position just under the preliminarily bending mold 72.
(d) The glass sheet G, which has been preliminarily bent, is vacuum-sucked by the preliminarily bending mold 72 to be taken up from the preliminarily bending supporting-frame 254. Since the preliminarily bending mold 72 has a function to take up the preliminarily bent glass sheet G from the preliminarily bending supporting-frame 254, the preliminarily bending mold 72 may be referred to as a suction mold. Thus, the preliminarily bending mold (suction mold) 72 is made simpler and lighter than the preliminarily bending mold 72 shown in Fig. 6 since the preliminarily bending mold according to this embodiment is specialized in vacuum suction.
(e) While the glass sheet G is sucked by the preliminarily bending mold (suction mold) 72, the finally bending supporting-frame 84 moves to a position just under the preliminarily bending mold (suction mold) 72. Explanation of the subsequent steps will be omitted since the subsequent steps are performed in a similar way to the bending apparatus 10 according to the first embodiment.

In accordance with the preliminarily bending device 250 thus formed, it is possible to stepwise develop the deformation of the glass sheet G by gravity, by moving the plural ring elements 252 upward and downward to control the heights of the respective ring elements.

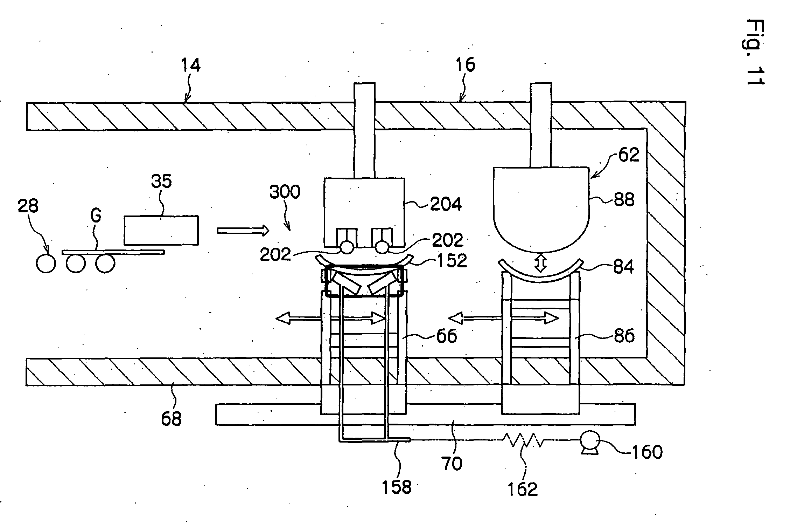

In the preliminarily bending device 300 shown in Fig. 11, the female mold 152 shown in Fig. 7 is disposed in place of the preliminarily bending supporting-frame 64, and the local heaters 202 are disposed in place of the preliminarily bending mold 72.

In accordance with preliminarily bending device 300, it is possible to perform preliminarily bending by subjecting a glass sheet G to deformation by gravity and vacuum-suction by the female mold 152 while employing the local heaters 202 to heat a region of the glass sheet to be subjected to a great amount of deformation.

Specifically, (a) the glass sheet G, which has been heated to a temperature of not lower than the softening point in the heating furnace, is put on the female mold 152 by the flat mold 35. (b) The female mold 152 moves to a position just under the local heaters 202. (c) The local heaters 202 lower to locally heat the glass sheet G. Additionally, deformation by gravity and local deformation by the female mold 152 progress, preliminarily bending the glass sheet. (d) After completion of preliminarily bending, the glass sheet G moves to the position just under the finally bending mold 88 and is suck and held by the finally bending mold 88. (e) The finally bending supporting-frame 84 moves to the position just under the finally bending mold 88. (f) The finally bending mold 88 lowers to press the glass sheet G between the finally bending supporting-frame 84 and the finally bending mold, performing finally bending. Explanation of the subsequent steps will be omitted since the subsequent steps are performed in a similar way to the bending apparatus 10 according to the first embodiment.

In accordance with the preliminarily bending device 300 thus formed, the local heating by the local heaters 202 and the vacuum action by the female mold 152 can be combined to reduce the viscosity of a region to be greatly deformed by vacuum-suction. Thus, it is possible to realize a greater amount of local deformation than a case wherein the local heating or the vacuum action is independently applied. Additionally, it is possible to improve the shape quality since it is possible to suppress an adverse effect, such as distortion, on a peripheral region.

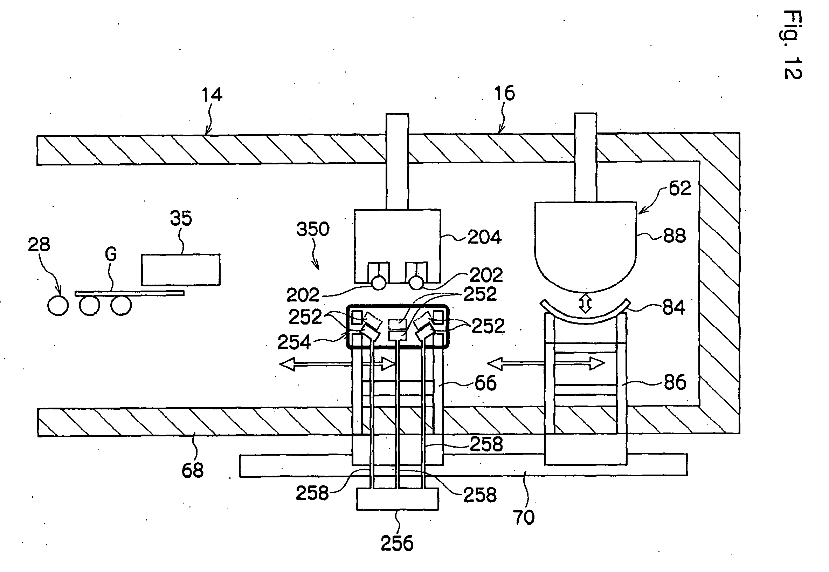

In the preliminarily bending device 350 shown in Fig. 12, the preliminarily bending supporting-frame 254 shown in Fig. 10 is disposed in place of the preliminarily bending supporting-frame 64, and the local heaters 202 shown in Fig. 9 are disposed in place of the preliminarily bending mold 72.

In this preliminarily device 350, preliminarily bending is controlled by upward and downward moving the ring elements 252 forming the preliminarily bending supporting-frame 254 while employing the local heaters 202 to heat a region to be subjected to a great amount of deformation.

Specifically, (a) the glass sheet G, which has been heated to a temperature of not lower than the softening point in the heating furnace, is put on the preliminarily bending supporting-frame 254 by the flat mold 35. (b) The preliminarily bending supporting-frame 254 is moved to a position just under the local heaters 202. (c) The local heaters 202 lower to locally heat the glass sheet G. Although deformation by gravity progresses at the same time, the progress in the deformation by gravity is controlled by adjusting vertical positions of the respective ring elements 252 of the preliminarily bending supporting-frame 254. (d) After completion of preliminarily bending, the glass sheet G moves to the position just under the finally bending mold 88 and is sucked and held by the finally bending mold 88. (e) The finally bending supporting-frame 84 moves to the position just under the finally bending mold 88. (f) The finally bending mold 88 lowers to press the glass sheet G between the finally bending supporting-frame 84 and the finally bending mold, performing finally bending. Explanation of the subsequent steps will be omitted since the subsequent steps are performed in a similar way to the bending apparatus 10 according to the first embodiment.

In accordance with this preliminarily bending device 350, the local heating by the local heaters 201 and the vertical movement of each of the ring elements 252 of the preliminarily bending supporting-frame 254 can be combined to locally control the speed of deformation of the glass sheet G more finely. Thus, it is possible to realize a more complicated deformation distribution than a case wherein the local heating or the vertical movement of each of the ring members is independently applied. It is possible to determine an arbitrary position as the inflection point between curved surfaces by interlocking the vertical movements of the respective ring elements 252 with the time for activating each of the local heaters 202. Thus, it is possible to the glass sheet in a complicated shape containing an asymmetric shape to expand a bending range.

In place of the preliminarily bending mold 72, which is made of a hard material, a balloon type bending device, which blows up a balloon to preliminarily bend a glass sheet G by the surface pressure of the balloon, is also applicable. This type of preliminarily bending device is appropriate to bend a glass sheet in a shape close to a globe since a uniform surface pressure can be applied to a glass sheet G to equalize the amount of distortion on the entire surface of the glass sheet. Additionally, it is possible to improve optical quality and to expand a bending range since it is possible to avoid a defect that a high surface pressure is locally caused to distort the glass sheet G.

A preliminarily bending device wherein the ring elements 252 of the preliminarily bending supporting-frame 254 are upward and downward moved to form a glass sheet G in a wavy shape is also applicable.

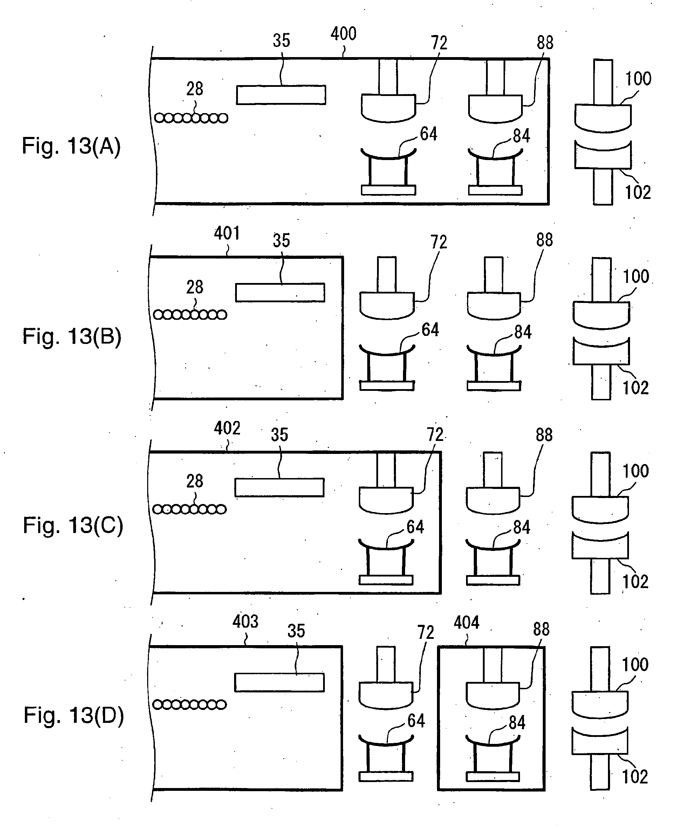

Figs. 13(A) to 13(D) are schematic views showing various arrangements of the preliminarily bending unit and the finally bending unit. Fig. 13(A) shows a case wherein the preliminarily bending unit (including the preliminarily bending mold 72 and the preliminarily bending supporting-frame 64) and the finally bending unit (including the finally bending mold 88 and the finally bending supporting-frame 84) are disposed in a heating furnace 400. Fig. 13(B) shows a case wherein the preliminarily bending unit (including the preliminarily bending mold 72 and the preliminarily bending supporting-frame 64) and the finally bending unit (including the finally bending mold 88 and the finally bending supporting-frame 84) are disposed outside a heating furnace 401. Fig. 13(C) shows a case wherein the preliminarily bending unit (including the preliminarily bending mold 72 and the preliminarily bending supporting-frame 64) is disposed in a heating furnace 402, and wherein the finally bending unit (including the finally bending mold 88 and the finally bending supporting-frame 84) is disposed outside the heating furnace 402. Fig. 13(D) shows a case wherein the preliminarily bending unit (including the preliminarily bending mold 72 and the preliminarily bending supporting-frame 64) is disposed outside a heating furnace 403, and wherein the finally bending unit (including the finally bending mold 88 and the finally bending supporting-frame 84) is disposed in a heating furnace 404.

Each of the arrangements is contained in the present invention. The provision of a bending unit in a furnace is advantageous in that the temperature of a glass sheet can be kept constant. The provision of a bending unit outside a furnace is advantageous in that it is easy exchange the supporting-frame or the mold for a different one. In consideration of these advantageous and the kind (such as the size, the shape and the application) of a glass sheet to be produced, it is appropriately determined which arrangement should be adopted.

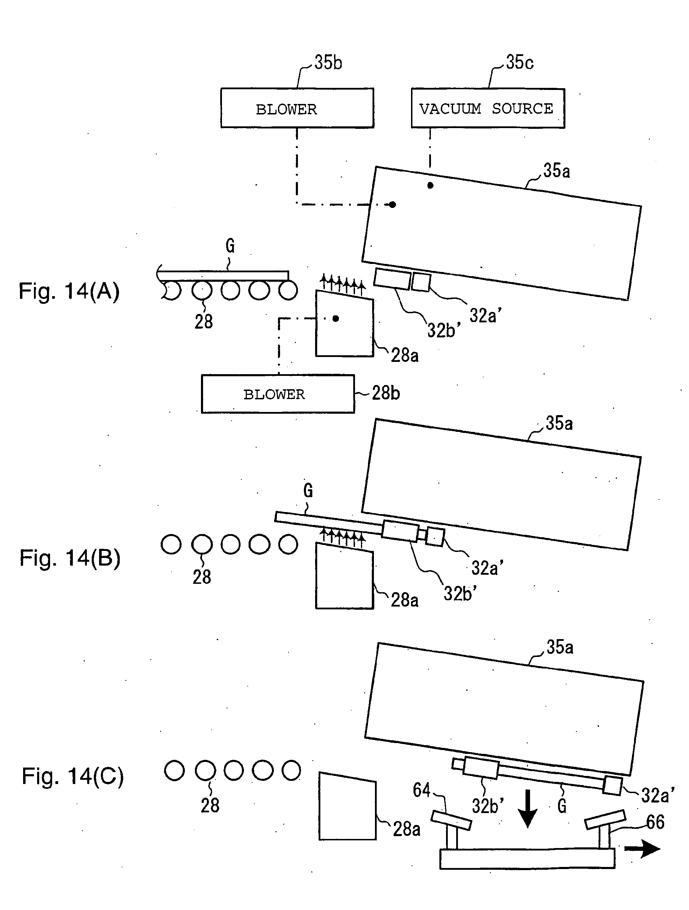

Figs. 14(A) to 14(C) are schematic views showing another embodiment of the transferring unit, which transfers a heated and softened glass sheet onto the preliminarily bending supporting-frame. As shown in Fig. 14(A), the transferring unit includes the roller conveyor 28 for conveying the heated and softened glass sheet G, a floating device 28a for supporting the glass sheet G in a floating state, and a flat mold 35a for holding the glass sheet G without contact with the glass sheet. The glass sheet G, which has been conveyed by the roller conveyor 28, passes above an upper surface of the floating device 28a by inertia (Fig. 14(A) and 14(B)). At that time, the glass sheet G reaches a lower surface of the flat mold 35a, being floated, since the air supplied from a blower 28b is injected through a countless number of apertures formed in the upper surface of the floating device 28.

On the other hand, the flat mold 35a has a countless number of apertures formed in the lower surface, and the respective apertures are coupled with a blower 35b or a vacuum source 35c. The number of the apertures coupled with the blower 35b and the number of the apertures coupled with the vacuum source 35c are almost equal to each other. By simultaneously making suction and injection through the apertures, the glass sheet G, which has approached the lower surface of the flat mold 35a, can be held without being dropped and without being brought into contact with the flat mold 35a. The glass sheet G held by the flat mold 35a further progresses in the right direction in these figures by inertia.

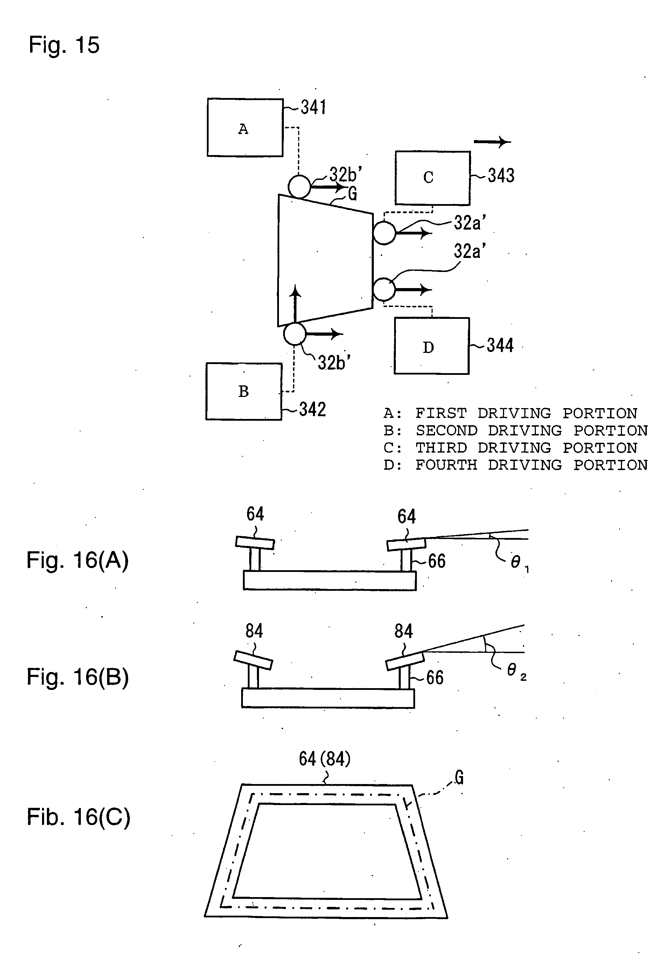

In the vicinity of the lower surface of the flat mold 35a, positioners 32a' and 32a', and positioners 32b' and 32b', which are independently connected to driving portions 341 to 344, are standby (Fig. 15), the glass sheet G is positioned in the conveying direction by the positioners 32a', and the glass sheet G is positioned in a direction orthogonal to the conveying direction by the positioners 32b' (arrows in this figure showing the moving directions of the positioners). When the glass sheet G is stopped at a position, the suction by the flat mold 35a is stopped to drop and put the glass sheet G on the preliminarily bending supporting-frame 64 (Fig. 14(C)).

Fig. 16(A) is a side view showing a preliminarily bending supporting-frame, Fig. 16(B) is a side view showing a finally bending supporting-frame, and Fig. 16(C) is a plan view showing an example of the relationship between the preliminarily bending supporting-frame (or the finally bending supporting-frame) and a glass sheet. As shown in Figs. 16(A) and 16(B), the frame 64 has a different inclination angle from the frame 84 in order to change the amount of deformation of a glass sheet in both of preliminarily bending and finally bending. When the respective frames have different inclination angles of θ₁ and θ₂, the relationship of θ1<θ2 is established. A glass sheet G has a peripheral edge put on the frame 64 (or 84) in a ring shape. The relationship of θ1<θ2 may be established throughout the entire periphery of the respective frames or at one portion of the entire periphery. Each of the frames may be formed from a single ring-shaped part or a combination of plural parts. Each of the frames may have concavities and convexities, steps, holes or the like formed on a surface thereof.

As explained, in accordance with each of the preliminarily bending devices 60, 150, 200, 250, 300 and 350 of the embodiments, the supporting-frame dedicated to preliminarily bending is employed to perform preliminarily bending before finally bending by the finally bending device 62. As a result, it is possible to realize, with high productivity, a glass sheet G which optically has high quality and is bent in a complicated shape or deeply bent shape, and which has been difficult to be produced so as to have such high quality and such a shape by the prior art.

In some of the embodiments, the bending surfaces 73 and 89 of the preliminarily bending mold 72 and the finally bending mold 88 have the plural air apertures 74 formed therein, a glass sheet G is sucked through the air apertures 74 by the preliminarily bending mold 72 after preliminarily bending of the glass sheet G and the finally bending mold 88 after finally bending of the glass sheet G, and the glass sheet G is pressed against the bending surfaces 73 and 89 of the preliminarily bending mold 72 and the finally bending mold 88. Thus, it is possible to improve the bending precision in each of the preliminarily bending operation and the finally bending operation.

The entire disclosure of Japanese Patent Application No. 2003-433533 filed on December 26, 2003 including specification, claims, drawings and summary is incorporated herein by reference in its entirety.

## Claims

1. A method for bending a glass sheet, which comprises a heating step for heating and softening a glass sheet, and a bending step for bending the heated and softened glass sheet in a desired shape; **characterized in that** the bending step comprises:
a preliminarily bending step for putting the heated and softened glass sheet on a preliminarily bending supporting-frame, the glass sheet having an edge portion supported by the preliminarily bending supporting-frame, and for bending the glass sheet into a desired preliminarily bent shape while putting the glass sheet on the preliminarily bending supporting-frame; and
a finally bending step for transferring the preliminarily bent glass sheet on a finally bending supporting-frame, the glass sheet having an edge portion supported by the finally bending supporting-frame, and for bending the glass sheet into a final bent shape by pressing the glass sheet against a bending surface of a finally bending mold while putting the glass sheet on the finally bending supporting-frame.

2. The method according to Claim 1, wherein an amount of deformation of the glass sheet in the preliminarily bending step is from 20 to 80% of an amount of deformation of the glass sheet caused in a course of from the heating step to the finally bending step.

3. The method according to Claim 1 or 2, wherein the preliminarily bending step and the finally bending step are performed in a heating furnace.

4. The method according to any one of Claims 1 to 3, wherein the preliminarily bending step comprises at least one step or a combination of at least two steps selected from the group consisting of a) a step for pressing the glass sheet between the preliminarily bending supporting-frame and a preliminarily bending mold, b) a step for sucking a lower surface of the glass sheet put on the preliminarily bending supporting-frame, c) a step for heating at least one portion of the glass sheet put on the preliminarily bending supporting-frame, and d) a step for employing a vertically movable ring element to support one portion of the glass sheet put on the preliminarily bending supporting-frame.

5. An apparatus for bending a glass sheet, which comprises a heater for heating and softening a glass sheet, and a bending unit for bending the heated and softened glass sheet in a desired shape; **characterized in that** the bending unit comprises:
a preliminarily bending unit including a preliminarily bending supporting-frame and a preliminarily bending means, the glass sheet being put on the preliminarily bending supporting-frame and having an edge portion supported by the preliminarily bending supporting-frame, the preliminarily bending means bending the glass sheet in a desired preliminarily bent shape while the glass sheet is put on the preliminarily bending supporting-frame; and
a finally bending unit including a finally bending supporting-frame and a finally bending mold, the preliminarily bent glass sheet being put on the finally bending supporting-frame and having an edge portion supported by the finally bending supporting-frame, the glass sheet being pressed by the finally bending mold, whereby the glass sheet is bent in a final bent shape.

6. The apparatus according to Claim 5, wherein an amount of deformation of the glass sheet caused by the preliminarily bending unit is from 20 to 80% of an amount of deformation of the glass sheet finally caused.

7. The apparatus according to Claim 5 or 6, wherein the preliminarily bending unit comprises at least one element or a combination of at least two elements selected from the group consisting of a) a preliminarily bending mold, for pressing the glass sheet, b) a unit including a suction chamber disposed under the preliminarily bending supporting-frame and an air sucker communicating with the suction chamber, c) a heater for heating at least one portion of the glass sheet put on the preliminarily bending supporting-frame, and d) a unit including a plurality of ring elements forming the preliminarily bending supporting-frame and a driving device for vertically moving at least one of the ring elements.

8. The apparatus according to any one of Claims 5 to 7, wherein the finally bending mold and/or the preliminarily bending mold has a plurality of apertures formed in a bending surface thereof, whereby the glass sheet is bent by sucking air through the apertures after the glass sheet is pressed.

9. The apparatus according to any one of Claims 5 to 8, wherein the preliminarily bending unit and the finally bending unit are disposed in a heating furnace.

10. The apparatus according to any one of Claims 5 to 9, further comprising a roller conveyor for conveying the heated and softened glass sheet, a floating unit disposed at a most downstream portion of the roller conveyor in order that the glass sheet conveyed by the roller conveyor is floated by injected air, a flat mold for holding the floated glass sheet without contact with the glass sheet, and a positioner for adjusting a position of the glass sheet with respect to the flat mold.
